(19) Europäisches Patentamt / European Patent Office / Office européen des brevets

(11) **EP 2 233 434 A1**

(12) **EUROPEAN PATENT APPLICATION**
published in accordance with Art. 153(4) EPC

(43) Date of publication:
**29.09.2010 Bulletin 2010/39**

(51) Int Cl.:
*C01B 13/14* (2006.01)  *C01B 19/00* (2006.01)
*C01B 33/18* (2006.01)  *C01F 7/02* (2006.01)
*C01F 17/00* (2006.01)  *C01G 9/02* (2006.01)
*C01G 19/02* (2006.01)  *C01G 23/047* (2006.01)
*C01G 25/02* (2006.01)  *C01G 31/02* (2006.01)
*C01G 53/04* (2006.01)  *C25B 1/00* (2006.01)
*H01B 1/08* (2006.01)  *H01B 13/00* (2006.01)

(21) Application number: 08858777.9

(22) Date of filing: **15.12.2008**

(86) International application number:
**PCT/JP2008/072757**

(87) International publication number:
**WO 2009/075375 (18.06.2009 Gazette 2009/25)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.12.2007 JP 2007341767**

(71) Applicant: **Hiraaki Co., Ltd.**
**Fukuoka 811-2301 (JP)**

(72) Inventors:
• **TAKAKI, Takeshi**
**Fukuoka-shi**
**Fukuoka 812-0004 (JP)**

• **HIRAAKI, Taisei**
**Fukuoka-shi**
**Fukuoka 812-0004 (JP)**
• **NAKASHIMA, Kunihiko**
**Fukuoka-shi**
**Fukuoka 819-0395 (JP)**

(74) Representative: **Bohmann, Armin K.**
**bohmann**
**Anwaltssozietät**
**Nymphenburger Strasse 1**
**80335 München (DE)**

(54) **PROCESS FOR PRODUCING ELECTROCONDUCTIVE INORGANIC OXIDE PARTICLES AND ELECTROCONDUCTIVE INORGANIC OXIDE PARTICLES PRODUCED BY THE PROCESS**

(57)    An object of the present invention is to provide a conductive inorganic oxide powder that is more fine and reduced in powder resistivity than a conventional conductive inorganic oxide powder. In order to achieve the object, the present invention adopts a method for manufacturing conductive inorganic oxide particles in which conductivity is furnished by doping a dopant metal component into the inorganic oxide particle where a step A through a step D described below are carried out in manufacturing of the conductive inorganic oxide particles. Prepare an inorganic oxide particles-containing slurry which contain the inorganic oxide particles (step A), the inorganic oxide particles-containing slurry which is made to contain a dopant metal component and an electrolysis method is carried out for electrolytic doping to dope a dopant metal component into the inorganic oxide particles by using a electrolytic doping unit 1 (step B), filtering and drying the slurry after finishing the electrolytic doping and collect particles by filter (step C), and firing the particles collected by filter to obtain conductive inorganic oxide particles (step D).

Fig. 1

EP 2 233 434 A1

**Description**

Technical Field

The present invention relates to a method for manufacturing conductive inorganic oxide particles and conductive inorganic oxide particles obtained by the method. In particular, the present invention relates to conductive zinc oxide particles and the like suitable as a transparent electrode-forming material.

Background Art

In the past years, conductive inorganic oxide particles have been used in various applications. Among the applications, it has been a usage as a material for forming a transparent electrode in a liquid crystal display device, as disclosed in Patent Document 1. In the descriptions in Patent Document 1, for example, a crystallized indium tin oxide (ITO) film is used. In many cases, such an ITO film is formed from an ITO powder constituted of so-called ITO particles.

The ITO particle are tin-containing indium oxide in which tin (Sn) is doped into indium oxide ($In_2O_3$) particles, as disclosed in Patent Document 2. It is a material suitable for forming a transparent electrode by processing into a conductive paste or a conductive ink because a conductive film formed has conductivity, the resistivity of $100\,\Omega\cdot cm$ or less.

However, indium that is a constituent element of indium oxide used as a core material of tin-containing indium oxide is one of rare metals with limited stock and high trading price in the market. That is, as long as the conductive inorganic oxide powder using indium oxide is manufactured, cost reduction in the production is limited to make it impossible to supply in the markets in cheap price.

In such background, an alternative product without using indium oxide as a core material and can form transparent electrodes and the like has been developed. For example, a conductive powder made of an antimony-doped tin oxide powder containing 0.01 to 40% by weight of aluminum in terms of $Al_2O_3$ is disclosed in Patent Document 2. The conductive powder made of the antimony-doped tin oxide powder is obtained according to a manufacturing method **characterized in that** a solution containing a tin compound, an antimony compound and an aluminum compound is neutralized to co-precipitate hydrates of tin oxide, antimony oxide and aluminum oxide and then the co-precipitate is fired. Thus, in the conventional ITO powder, the chemical reaction in a wet process is utilized for doping a dopant to the inorganic oxide particles without conductivity to furnish conductivity.

Furthermore, manufacturing of less expensive conductive inorganic particles (powder) has been intended as disclosed in Patent Document 3. The manufacturing process adopted is that in the process to coat antimony-doped tin oxide on a surface of an inorganic powder, a hydrochloric acid aqueous solution of tin chloride and an alkali aqueous solution are simultaneously added in an aqueous suspension of the inorganic powder to make tin hydrate precipitated by hydrolysis coat, then a mixed hydrochloric acid aqueous solution of tin chloride and antimony chloride and an alkali aqueous solution are simultaneously added in the solution to further coat the inorganic powder coated with the tin hydrate by tin hydrate containing co-precipitated antimony hydrate. Next, the thus-obtained coated powder is heated to fire to obtain a conductive powder having an antimony oxide-doped tin oxide coating.

Further, conductive zinc oxide powder that can be manufactured less expensive has been used as an alternative of the ITO powder in recent years. For example, Patent Document 4 discloses a manufacturing method which eliminate detriments such as higher resistance caused by contamination of sulfate anions by reducing a residual amount of sulfate anions derived from aluminum sulfate contained in a production process of conductive zinc oxide as low as possible. That is, in a method for manufacturing a conductive zinc oxide which uses non-conductive zinc oxide to be made conductive, aluminum sulfate as an activating component and at least one or more kinds of compounds selected from the group consisting of ammonium carbonate, ammonium bicarbonate, ammonium nitrate and urea as a corroding component as indispensable raw materials, a method for manufacturing conductive zinc oxide characterized by that a precursor of conductive zinc oxide and a cation for fixing a sulfate radical are made to co-exist to fix a residual sulfate radical derived from the aluminum sulfate as an insoluble sulfate is adopted.

[Patent Document 1] Japanese Patent Laid-Open No. 2002-116455
[Patent Document 2] Japanese Patent Laid-Open No. 08-12332
[Patent Document 3] Japanese Patent Laid-Open No. 05-294631
[Patent Document 4] Japanese Patent Laid-Open No. 2000-53420

Disclosure of the Invention

Problems to be Solved by the Invention

However, even when a wet process described above is adopted, conductive inorganic oxide particles obtained by a chemical reaction in the process have problems described below.

First problem: sulfate anions derived from ammonium sulfate used in a production process remain in conductive inorganic oxide particles tends to raise the powder resistivity in a manufacturing method in which zinc oxide is doped with aluminum by adding ammonium sulfate or the like to a zinc oxide slurry to bond aluminum ion, followed by heating. That is, it is required to reduce penetration of sulfate anions into the conductive inorganic oxide particles.

Second problem: Primary particle diameters of conventional conductive inorganic oxide particles are too large, about 0.2 $\mu$m. That is, when an ink or a paste is prepared, the conventional conductive inorganic oxide particles cannot be uniformly mixed in a resin component, and when a coated layer and/or film or the like are formed, it is made hard to obtain an electrode film or a coated film excellent in transparency. When conductive inorganic oxide particles can be made fine, the particles can be used in a field of, for example, cosmetics. That is, when fine conductive inorganic oxide particles are contained in a foundation or the like, skins can be coated in transparent to make drastic improvement of the UV-shielding effect easy. Furthermore, when conductive inorganic oxide particles can be made fine, the fine conductive inorganic oxide particles can be replaced with a zinc oxide powder added to rubber products, plastic products and paint products for preventing static charging and shielding IR-rays. Since the fine conductive inorganic oxide particles can furnish high conductivity with a less blending ratio, reduced costs and improved transparency in rubber products, plastic products and paint products can be made possible.

Third problem: a value of powder resistivity of conventional conductive inorganic oxide particles is too large, about 200 $\Omega$·cm to 500 $\Omega$·cm. Light having wavelengths in an IR region can be shielded as well as zinc oxide powder when the conductive inorganic oxide powder is low in a value of powder resistivity and excellent in the conductivity. That is, when such fine zinc oxide powder can be obtained, by making the zinc oxide powder contain in paints for automobiles or external wall paints for houses, IR-rays in solar light can be shielded. As a result, even under strong sunshine of summer, elevation of a temperature in a room or a car can be effectively inhibited, and, in winter, spreading of heat to outside can be inhibited also. So, it is preferable from the viewpoint of energy saving. That is, when fine zinc oxide powder is blended in cosmetics, not only preventing of UV-rays absorption but also making heat rays mild to skins by inhibiting of IR-Rays transmitting can be achieved.

As can be understood in descriptions above, a conductive inorganic oxide powder that is made more fine than a conventional conductive inorganic oxide powder and has more reduced powder resistivity is required.

Means for Solving the Problem

In this connection, after studying hard, the present inventors have enabled to obtain fine conductive inorganic oxide particles by adopting a method for manufacturing conductive inorganic oxide particles described below. Furthermore, because the conductive inorganic oxide particles obtained according to the manufacturing method contains less impurity, the powder resistivity is low to show excellent conduction performance. Next, brief summary on a method for manufacturing conductive inorganic oxide particles of the present invention and conductive inorganic oxide particles will be described.

A method for manufacturing conductive inorganic oxide particles according to the present invention: A method for manufacturing conductive inorganic oxide particles according to the present invention is a method for manufacturing conductive inorganic oxide particles in which conductivity is furnished by doping a dopant metal component into the inorganic oxide particles, wherein electrolytic doping where the dopant metal component and a constituent component of the inorganic oxide particles are made to be composite by carrying out electrolysis of the inorganic oxide particles-containing slurry which is made to be contained a dopant metal component, followed by filtering, drying and collection by filter.

When the method of the present invention for manufacturing conductive inorganic oxide particles is more specifically described, the method is to furnish conductivity by doping a dopant metal component into the inorganic oxide particle to obtain conductive inorganic oxide particle characterized in carrying out steps A to D described below.

Step A: A step for preparing the inorganic oxide particles-containing slurry which is made to contain the inorganic oxide particles;

Step B: A step for doping a dopant metal component into the inorganic oxide particles in which the inorganic oxide particles-containing slurry which is made to contain a dopant metal component is carried out an electrolysis method for electrolytic doping;

Step C: A step for filtering and drying the slurry that has been carried out the electrolytic doping and collect particles by filter; and

Step D: A step for firing the particles collected by filter to obtain conductive inorganic oxide particles.

In the method of the present invention for manufacturing conductive inorganic oxide particles, the inorganic oxide particles used in the step A are preferable to be particles made of any of zinc oxide, titanium oxide, silica, alumina, zirconia, magnesia, cerium oxide, nickel oxide, tin oxide, tellurium oxide and vanadium oxide.

The inorganic oxide particles used in the step A is preferable to have an average primary particle diameter of 1 nm to 30 nm.

The inorganic oxide particles-containing slurry prepared in the step A is preferable to contain 5% by weight to 30% by weight of the inorganic oxide particles.

The inorganic oxide particles-containing slurry prepared in the step A is preferable to contain an electrolyte at a concentration of 0.001 mol/l to 0.05 mol/l.

Next, a dopant metal component made to be contained in the inorganic oxide particles-containing slurry in the step B is preferable to be contained at a concentration of 0.1% by weight to 20.0% by weight in terms of an oxide of the dopant metal component.

It is preferred that a dissolvable anode made of a dopant metal is used in the electrolysis method in the step B to supply dopant metal ions to the inorganic oxide particles-containing slurry by electrolysis to maintain a concentration of the dopant metal ions at a constant level.

A cathode made of the dopant metal is preferable to be used in the electrolysis method in the step B.

Furthermore, also as for conditions of the electrolysis method used in the step B in the method of the present invention for manufacturing conductive inorganic oxide particles, constant condition is preferable to be adopted. The electrolysis is preferable to be carried out while stirring the slurry.

The electrolysis in the electrolysis method in the step B is preferable to be carried out at a current density of 0.3 mA/cm$^2$ to 100 mA/cm$^2$.

The electrolysis in the electrolysis method in the step B is preferable to be carried out by setting a slurry temperature in the range of 30°C to 85°C.

Furthermore, it is preferable that stirring of the slurry after finishing the electrolysis as an additional stirring to improve particle dispersion is carried out for 1 hr or more in the step B.

In the method of the present invention for manufacturing conductive inorganic oxide particles, a reducing atmosphere of the firing in the step D is preferable to adopt any of a hydrogen-containing atmosphere, an inert gas atmosphere, an ammonia gas atmosphere and a vacuum atmosphere.

A firing temperature of the firing in the step D is preferable to be from 250°C to 800°C.

It is preferable that a carbon dioxide gas is bubbled during the electrolysis in the electrolysis method in the step B.

When the carbon dioxide gas bubbling is carried out, a pyrolysis treatment step for pyrolyzing basic metal carbonate generated by the carbon dioxide gas bubbling is preferable to be disposed between the steps C and D.

In the method of the present invention for manufacturing conductive inorganic oxide particles, the dopant metal component is preferable to be one kind or two or more kinds of components selected from gallium, iridium, copper, antimony, arsenic, boron, thallium, bismuth, vanadium, niobium, tantalum and iron.

Conductive inorganic oxide powder of the present invention: A conductive inorganic oxide powder of the present invention is a conductive inorganic oxide powder composed of conductive inorganic oxide particles obtained by doping a dopant metal component into the inorganic oxide particle according to the method for manufacturing conductive inorganic oxide particles according to any of the methods described above, wherein the conductive inorganic oxide powder is composed of conductive inorganic oxide particles having an average primary particle diameter of 3 nm to 40 nm.

The conductive inorganic oxide powder of the present invention is preferable that 0.1% by weight to 20.0% by weight of the dopant metal component is contained in terms of the oxide of the dopant metal component.

In the conductive inorganic oxide powder of the present invention, any of zinc oxide particles, titanium oxide particles, silica particles, alumina particles, zirconia particles, magnesia particles, cerium oxide particles, nickel oxide particles, tin oxide particles, tellurium oxide particles and vanadium oxide particles are preferable to be used as the inorganic oxide particles.

In the conductive inorganic oxide powder of the present invention, the dopant metal component is preferable to be one kind or two or more kinds of components selected from gallium, iridium, copper, antimony, arsenic, boron, thallium, bismuth, vanadium, niobium, tantalum and iron.

Furthermore, in the conductive inorganic oxide powder of the present invention, a sum component amount of the respective constituents, an amount of metal components constituting the inorganic oxide particles, an amount of a dopant metal component and an amount of an oxygen component is preferable to be 99.9% by weight or more against to 100% by weight of an amount of the conductive inorganic oxide powder.

The conductive inorganic oxide powder of the present invention shows low resistance of 500 Ω·cm or less in the state that 1.0 g of the conductive inorganic oxide powder in a cylindrical vessel (inner diameter: 18 mm) is pressed with a pressure of 100 kg/cm$^2$ and resistance is measured between both pressed edges of a specimen.

Advantages of the Invention

The method according to the present invention for manufacturing conductive inorganic oxide particles is to obtain conductive inorganic oxide particles by making a dopant to be contained in inorganic oxide particles by an electrolysis method, and then the particles are collected by filter and fired. When the method is adopted, a dopant can be more stably made to be contained in fine inorganic oxide particles when compared to the conventional doping method that utilizes a chemical reaction in a wet process. Moreover, when an electrolysis method is adopted, a simple composition of a liquid system with less contamination of components can be adopted because a chemical reaction of chemical substances is not utilized. That is, reduced content of impurities improve purity in the conductive inorganic oxide particles constituting the conductive inorganic oxide powder of the present invention. As a result, the conductive inorganic oxide powder composed of the conductive inorganic oxide particles of the present invention is small in powder resistivity and shows excellent conduction performance even when particle diameters of constituent particles are small.

Best Mode for Carrying Out the Invention

A mode for carrying out the present invention will be described in order of a method for manufacturing conductive inorganic oxide particles of the present invention and conductive inorganic oxide particles.

<Mode for manufacturing conductive inorganic oxide particles of the present invention>

As a technical concept, a method of the present invention for manufacturing conductive inorganic oxide particles is a method for manufacturing conductive inorganic oxide particles in which conductivity is furnished by doping a dopant metal component into the inorganic oxide particle, wherein electrolytic doping is carried out to make the dopant metal component and a constituent component of the inorganic oxide particles composite by carrying out electrolysis of the inorganic oxide particles-containing slurry which is made to contain a dopant metal component, followed by filtering, drying and collection by filter. The technical concept can be specifically shown below. Next, for steps A to D, steps will be described one by one.

Step A: In the step A, the inorganic oxide particles-containing slurry which is made to contain the inorganic oxide particles is prepared. In the beginning, inorganic oxide particles will be described. As for the inorganic oxide particles, any of zinc oxide, titanium oxide, silica, alumina, zirconia, magnesia, cerium oxide, nickel oxide, tin oxide, tellurium oxide and vanadium oxide is preferable to be used. This is because when the inorganic oxide particles described here are used, a dopant metal component can be doped by the electrolysis method. The method for manufacturing the inorganic oxide particles described here is not restricted to particular one. For example, various methods such as a wet synthetic method, a chemical vapor phase reaction method, a sputtering method, a sol-gel method or the like can be applicable.

The inorganic oxide particles used in the step A is preferable to have an average primary particle diameter from 1 nm to 30 nm. Here, although the lower limit value of the average primary particle diameter of the inorganic oxide particles is set at 1 nm. However, strictly speaking, it is not required to describe to completely eliminate particles of less than 1 nm. In the case where the average primary particle diameter is less than 1 nm, even when a transmission electron microscope is used at the magnification of about 500000 times, an accurate measurement of the particle diameters is difficult. So, 1 nm is set as a lower limit value tentatively. On the other hand, although there is no particular problem even when the average primary particle diameter of the inorganic oxide particles exceeds 30 nm, but an object of the present invention to obtain fine conductive inorganic oxide particles is made hard to achieve. For example, quality requirements in cases, a raw material for cosmetics, and forming of a fine transparent electrode having a low thickness of 1 $\mu$m or less may not be satisfied. That is, inorganic oxide particles having particle diameters in the range of 5 nm to 20 nm are preferable to use when production stability and convenient application in all fields of the inorganic oxide particles are considered.

Next, it can be stated clearly that particles having a large particle diameter exceeding the range of the above-described average primary particle diameter can be used as well. In such case, inorganic oxide particles will be dissolved by carbon dioxide gas bubbling to generate a metal salt such as zinc carbonate or the like as will be described later. It is because; original particle diameters of the inorganic oxide particles are made fine in the case. The carbon dioxide gas bubbling will be described later.

Next, the inorganic oxide particles-containing slurry prepared in the step A is preferable to contain 5% by weight to 30% by weight of inorganic oxide particles. The inorganic oxide particles-containing slurry here is basically that inorganic oxide particles are dispersed in water. Here, when content of the inorganic oxide particles is smaller than 5% by weight in the inorganic oxide particles-containing slurry, the amount of the inorganic oxide particles contained are made small to obtain small amount of conductive inorganic oxide particles and result poor industrial productivity. On the other hand, when the inorganic oxide particles contained are exceeding 30% by weight in the inorganic oxide particles-containing slurry, a slurry concentration is too high to make stirring hard and tends to result inhomogeneous reaction in a reaction system and the particles tend to aggregate.

In manufacturing of the conductive inorganic oxide particles of the present invention, electrodes are immersed in the inorganic oxide particles-containing slurry prepared in the step A for electrolysis. That is, an electrolyte is preferable to be added to perform electrolysis. In the electrolytes, hydrochloric acid as an inorganic acid is preferable to be used. This is because hydrochloric acid does not largely affect on a purity of the conductive inorganic oxide particles. As for the electrolyte, an electrolyte containing a metal component constituting inorganic oxide particles can be preferable to be used also. For example, in the case when zinc oxide is used for the inorganic oxide particles, zinc chloride is used, in the case when titanium oxide is used for the inorganic oxide particles, titanium sulfate is used, in the case when silica is used for the inorganic oxide particles, sodium silicate is used, in the case when alumina is used for the inorganic oxide particles, aluminum hydroxide is used, in the case when zirconia is used for the inorganic oxide particles, zirconium sulfate is used, in the case when magnesia is used for the inorganic oxide particles, magnesium sulfate is used, and so on. In addition, an electrolyte never be a contaminator nor disturbs conductivity can be used also.

The electrolyte contained in the inorganic oxide particles-containing slurry is preferable to be concentration of 0.001 mol/l to 0.05 mol/1. In the case when the electrolyte contained is less than 0.001 mol/1, excellent electrolysis may not performed during electrolysis to make homogeneous doping of the dopant metal component into the inorganic oxide particles hard. On the other hand, when the electrolyte contained exceeds 0.05 mol/l, electrolyzing may never affected during electrolysis, but dissolving of an aluminum material disposed as a dissolvable anode is made inhomogeneous to result doping of the dopant metal component into inorganic oxide particles inhomogeneous and same time, the anions are made to be contaminator when an amount of anions is not suitable.

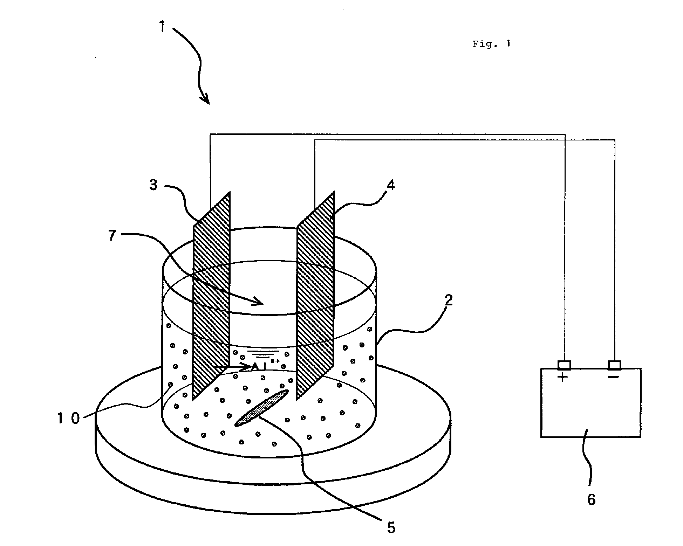

Step B: In the step B, a dopant metal component is made to be contained in the inorganic oxide particles-containing slurry and a dopant metal component is doped into the inorganic oxide particles by electrolytic doping. As for a method for making the dopant metal component to be contained in the inorganic oxide particles-containing slurry described above, a method where the inorganic oxide particles-containing slurry is made to originally contain a compound such as hydroxide of the dopant metal component, a method where an electrode constituted of a dissolvable dopant metal component is used and the dopant metal component is made to dissolve in the inorganic oxide particles-containing slurry by electrolysis, and a method in combination can be adopted. For example, a method where aluminum hydroxide that is an aluminum compound is contained originally in the inorganic oxide particles-containing slurry, a method where an aluminum component is made to dissolve in the inorganic oxide particles-containing slurry by electrolysis or the like by using a dissolvable aluminum electrode, can be used. This is because an aluminum component is just required to be contained in the inorganic oxide particles-containing slurry during electrolytic doping. As shown in Figure 1, in the case where an electrode constituted of a dissolvable dopant metal component is used, the inorganic oxide particles-containing slurry is put in an electrolysis cell 2 of an electrolytic doping unit 1, an anode electrode 3 and a cathode electrode 4 are disposed and electrolyzed to make the dopant metal component dope into the inorganic oxide particles 10 by electrolysis.

Before describing on the step B, logic of electrolytic doping will be described with mainly exemplifying the case where zinc oxide particles are doped with aluminum. The electrolytic doping here is a method where electric energy is put between electrodes to cause electrolysis, and ions generated are made to be composite with inorganic oxide particles. The electrolysis is composed of an electrode reaction (first reaction) which occurs at an interface between the electrode and zinc oxide slurry and a second reaction in which $Al^{3+}$ ions are made to be composite with ZnO. By utilizing the second reaction, a dopant metal component is made to be composite with particles of inorganic oxide such as zinc oxide or the like.

In the electrolytic doping here, a dissolvable anode constituted of aluminum is used. In this case, $Al^{3+}$ ions are made to dissolve from the anode in electrolysis. As the dissolved $Al^{3+}$ ions are in an excited state, aluminum hydroxide is formed in the slurry. Then, it is considered that inorganic oxide particles can be doped with the dopant metal component when any of two processes described later or both thereof occur simultaneously. Irrespective of the doping mechanisms described below, the dopant metal component can be doped with small amount of contaminator accompanied because consumption of chemicals is very small in the electrolytic doping. Next, a case where aluminum is used as the dopant metal component will be described.

In a first process, $Al^{3+}$ ions made to dissolve from an anode made of aluminum that is a dopant metal component form aluminum hydroxide by carrying out electrolysis in inorganic oxide particles-containing slurry, then the aluminum hydroxide sticks to a surface of the inorganic oxide particles. In the following firing, hydroxide is made to be oxide and simultaneously, an aluminum component that is a dopant metal component diffuses into inorganic oxide particles to finish the doping.

In a second process, $Al^{3+}$ ions made to dissolve from an anode made of aluminum that is a dopant metal component form aluminum hydroxide by carrying out electrolysis in the inorganic oxide particles-containing slurry. In addition, a part of the inorganic oxide particles contained in the inorganic oxide particles-containing slurry is dissolved by carbon dioxide gas bubbling to form basic metal carbonate (for example, zinc carbonate) simultaneously. Then obtained composite of aluminum hydroxide and basic metal carbonate co-precipitated is fired to make hydroxide and basic metal carbonate to be oxide and inorganic oxide particles homogeneously containing an aluminum component that is a dopant metal component are formed and finish the doping. The carbon dioxide gas bubbling may be performed to the inorganic oxide particles-containing slurry at the time before starting the electrolytic doping.

When inorganic oxide particles are thus doped with an aluminum component as a dopant metal component, the conductivity can be furnished to non-conductive inorganic oxide particles according to the following logic. Example will be described on zinc oxide particles. Zinc oxide (ZnO) which is constituent of zinc oxide particles has a wurtzite crystal structure. The wurtzite crystal structure is one kind of crystal structures found in ionic crystals where negative ions and positive ions bond with each other at a ratio of 1:1. The structure might be a structure obtained by combination of a hexagonal close-packed lattice arrangement formed of oxide ions and a hexagonal close-packed lattice arrangement formed of zinc ions. That is, the one hexagonal close-packed lattice overlaps in three eighths of a height of a hexagonal column in a height direction of the other hexagonal close-packed lattice by sliding. When the dopant metal component is doped into zinc oxide particles, dopant metal ions such as $Al^{3+}$ ions or the like may substitute zinc sites of the zinc oxide particle. Then, it should be considered that while a $Zn^{2+}$ ion has two outermost shell electrons and a substituted dopant metal ion may have one, three or five outermost shell electrons. So, when a $Zn^{2+}$ ion is substituted with an $Al^{3+}$ ion, one electron is excess relatively. The excess electron is made to be a free electron and with increasing of the free electron, an electric current is made easy to flow. As a result, the powder resistivity of zinc oxide particles is made lower to show conductivity.

Here, logic of an electrical conductivity of semiconductors will be investigated also. A substance obtained by doping a very small amount of impurity in a single crystal of a pure semiconductor is called an impurity semiconductor. The impurity semiconductor can be classified into an n-semiconductor and a p-semiconductor. The n-semiconductor is prepared by doping a little amount of an element having larger valence by one than that of silicon such as arsenic or the like in a high purity semiconductor material (mainly silicon) as an impurity. In the silicon crystal, neighbor silicon atoms share electrons each other and each of silicon atoms bonds as if it had 8 electrons. Electrons in such state are strongly bonded in atoms and can hardly contribute electric conduction. So, the pure silicon crystal is neither a conductor nor an insulator but a "semiconductor" where an electric current is hard to flow. However, when arsenic having 5 valences is doped thereto, one electron is made excessive in an outer shell, and the electron held weaker by the arsenic atom is made free in movement. The electron flows toward a positive electrode when a voltage is applied because the electron itself has a negative charge.

When zinc oxide particles are doped with an aluminum component as a dopant metal component, the conduction logic of the n-semiconductor described above can be applied. When an energy band of zinc oxide is considered, when an electron is excited exceeding an energy gap into a conduction band, an electron in the conduction band can move free to enable an electric current flow. Zinc oxide is a semiconductor having an energy gap between a valence band and a conduction band of about 3.2 eV. That is, the number of electrons thermally excited from the valence band to the conduction band is small at room temperature to result very large powder resistivity. However, when a dopant metal component is doped, a free electron excessive in an outer shell and a hole form a donor level to make an electron free from a dopant metal ion easily even at around room temperature. That is, conductive zinc oxide particles able to function as an electric conductor under room temperature can be obtained.

As for an anode used in the step B, a dissolvable anode electrode (for example, aluminum electrode) constituted of a dopant metal component is preferable to be used. When the dissolvable anode electrode is used, dopant metal ions are made to dissolve according to an electricity amount. That is, electrolysis stability is improved because an amount of dopant metal ions in the inorganic oxide particles-containing slurry subjected to electrolysis can be maintained at a constant level. In the case where an aluminum electrode is used as a dissolvable anode here, so-called pure aluminum is preferable to be used. When an alloy aluminum material is used, an amount of impurity elements such as manganese and iron may increase to make the purity of obtained conductive inorganic oxide particles low.

As for a dopant metal concentration in an electrolytic solution, it is preferable to be in the range of 0.1% by weight to 20.0% by weight in terms of dopant metal oxide (aluminum oxide ($Al_2O_3$) when the dopant metal is aluminum). When the dopant metal concentration is less than 0.1% by weight, the dopant metal component may be doped slowly and a doped amount is made small. That is, it is made difficult to obtain conductive inorganic particles having sufficient electric conductivity using inorganic oxide particles. On the other hand, when the dopant metal concentration exceeds 20.0% by weight, a doping amount is made excessive and a carrier concentration of obtained conductive inorganic oxide particles is made excessive to result poor carrier mobility. Same time, a dopant metal oxide (for example, $Al_2O_3$) is formed too much and the powder resistivity tends to be high.

In the electrolysis method used in the step B, a cathode electrode made of a dopant metal is preferable to be used as a cathode also. In the electrolysis, a polarized state in the electrolysis varies depending on a combination of materials of anode and cathode, and is made to be an important factor affecting on whether suitable electrolysis is made possible or not. In consideration of the description above, the most suitable cathode electrode such as aluminum, zinc or the like is suitably selected and used for a cathode when inorganic oxide particles are doped with a dopant metal component in consideration of a combination of a dissolvable anode electrode made of a dopant metal. As a result, the dopant metal component is promoted to make dissolve from the dissolvable anode electrode and an adequate doping operation can be made possible.

In a method of the present invention for manufacturing conductive inorganic oxide particles, the electrolysis is preferable to be carried out with stirring the inorganic oxide particles-containing slurry as electrolysis conditions used in the step B. This is because in a still inorganic oxide particles-containing slurry, even the stirring is carried out at the beginning, inorganic oxide particles may settle when the stirring is stopped to make carrying out homogeneous doping by electrolysis hard.

In the electrolysis method used in the step B, the carbon dioxide gas bubbling is preferable to be carried out during electrolysis. This is because finer conductive metal oxide particles can be obtained by dissolving a part or whole inorganic oxide particles in the inorganic oxide particles-containing slurry by bubbling carbon dioxide gas and formed basic metal carbonate is co-precipitated with hydroxide of a dopant metal followed by pyrolyzing. That is, in the case of zinc oxide particles, basic zinc carbonate ($Zn(CO_3)$) is formed in the inorganic oxide particles-containing slurry.

The electrolysis method in the step B is preferable to be carried out at a current density of 0.3 mA/cm$^2$ to 100 mA/cm$^2$. When the current density is less than 0.3 mA/cm$^2$, a doping speed of a predetermined amount of dopant metal component into inorganic oxide particles is slow and result small doping amount. When the doping amount is small, a carrier concentration is small to make it hard to obtain conduction performance required for conductive inorganic oxide particles. On the other hand, when the current density is made to exceed 100 mA/cm$^2$, a doping speed of a dopant metal component into inorganic oxide particles is excessive to increase a doping amount. When a doping amount is made excessive, a carrier concentration of obtained conductive inorganic oxide particles is made excessive to result poor carrier mobility. Same time, a dopant metal oxide (for example, $Al_2O_3$) is formed and the powder resistivity tends to be high.

Furthermore, it is preferable to carry out the electrolysis with a temperature of the inorganic oxide particles-containing slurry set in the range of 30°C to 85°C in the step B. When a solution temperature is less than 30°C, a reaction speed of doping is made slow. In addition, when the carbon dioxide gas bubbling is carried out, it makes generation of basic metal carbonate in the inorganic oxide particles-containing slurry difficult. On the other hand, when the solution temperature exceeds 85°C, evaporation of water in the inorganic oxide particles-containing slurry is made remarkable and a concentration of a component contained in the inorganic oxide particles-containing slurry cannot be maintained stably not to enable carrying out of stable electrolytic doping.

Furthermore, in the step B, after finishing the electrolytic doping, it is also preferable that the slurry is carried out additional stirring, continued stirring for 1 hr or more to improve particle dispersibility. Even when the particles aggregate during the electrolytic doping, an aggregation among particles might be broken up by carrying out additional stirring and it makes improvement of the particle dispersability possible. As for a stirring method at this time, stirring with a stirring blade, mild fluid mill stirring, lamellar mixing typical in a device called T. K. Filmix or the like can be used.

Step C: In the step C, the slurry that has carried out the electrolytic doping is filtrated, dried and particles are collected by filter. A filtration method and a drying method at this time are not particularly restricted and any popular methods and devices can be used.

Step D: In the step D, particles collected by filter are fired to be conductive inorganic oxide particles. In the method of the present invention for manufacturing conductive inorganic oxide particles, any of a hydrogen gas-containing atmosphere, an inert gas atmosphere, an ammonia gas atmosphere and a vacuum atmosphere as a reducing atmosphere used in firing in the step D may be preferable to be used. The reason why a reducing atmosphere or a non-oxidizing atmosphere is adopted here is that a firing speed is faster than that in the air atmosphere. As a result, substitution of a dopant metal ion for an atomic site (for example, a zinc site in zinc oxide) of a crystal lattice of inorganic oxide can be made fast and a dopant metal component is sufficiently dissolved in solid solution, and electro-conductivity is furnished to reduce resistance by releasing one electron from inorganic oxide, i.e. obtaining of low resistance conductive inorganic oxide is made easy.

Then, a firing temperature used in the firing in the step D is preferable to be from 300°C to 800°C. When the firing temperature is less than 300°C, substitution of an aluminum ion for an atomic site (for example, a Zn site in zinc oxide) of a crystal lattice of inorganic oxide is made difficult. As a result, it may be hard to obtain a conductive oxide having excellent conductivity. Furthermore, since it may take a longer firing time, industrial productivity required cannot be satisfied. On the other hand, when the firing temperature exceeding 500°C is adopted, substitution of an aluminum ion for an atomic site (for example, a Zn site in zinc oxide) of a crystal lattice of inorganic oxide is made easy. However, particles tend to easily stick each other to cause particle aggregation to generate grown coarse secondary particles. So, it is not preferable. When, more stable quality and productivity are considered for the conductive inorganic oxide particles in the above-described temperature range, a firing temperature from 300°C to 500°C is more preferable to be adopted.

When the carbon dioxide gas bubbling is carried out, a pyrolysis treatment step for pyrolyzing basic metal carbonate generated by the carbon dioxide gas bubbling is preferable to be disposed between the steps C and D. The pyrolysis treatment step is applied on the inorganic oxide particles before firing which finish electrolysis and basic metal carbonate sticks. For example, when zinc oxide particles are used as inorganic oxide particles, the pyrolysis treatment step is carried out to pyrolyze basic zinc carbonate Zn(CO$_3$) stuck to zinc oxide particles. At this time, preferable conditions used are such that a pyrolysis temperature of basic metal carbonate is from 250°C to 400°C, a pyrolysis time of from 1 hr to 3 hr and a firing atmosphere of an air atmosphere. Here, when the pyrolysis temperature is less than 250°C, speedy pyrolysis of the basic metal carbonate hardly performed. On the other hand, when the pyrolysis temperature exceeds 400°C, a phenomenon occurs in the firing in the step D happens simultaneously with the pyrolysis of the basic metal carbonate not to enable obtaining conductive inorganic oxide particles having excellent quality. In addition, the pyrolysis time is determined according to the pyrolysis temperature.

<Mode of conductive inorganic oxide particles of the present invention>

The method of the present invention for manufacturing conductive inorganic oxide powder described above is suitable for manufacturing conductive inorganic oxide particles as fine conventionally not performed. That is, when fine inorganic oxide particles are used as a raw material, conductive inorganic oxide particles doped with a dopant metal component having an average primary particle diameter from 1 nm to 30 nm can be obtained. The particle size range can be achieved when inorganic oxide particles having an average primary particle diameter from 3 nm to 40 nm are used as a raw material. Such conductive inorganic oxide powder composed of conductive inorganic oxide particles having an average primary particle diameter in above described level have never been obtained through a conventional manufacturing method using a chemical reaction, i.e. the conductive inorganic oxide powder is not commercially available product in the present market.

The conductive inorganic oxide powder of the present invention manufactured according to the above-described method can supply a product that contains 0.1% by weight to 20.0% by weight of a dopant metal component in terms of dopant metal oxide (for example, aluminum oxide (Al$_2$O$_3$)). However, when a dopant metal component contained in the conductive inorganic oxide powder is less than 0.1% by weight in terms of dopant metal oxide, a doping amount of the dopant metal component in the inorganic oxide particles is not enough to make it hard to furnish conductivity to inorganic oxide particles. On the other hand, when a dopant metal component contained in the conductive inorganic oxide powder exceeds 20.0% by weight in terms of dopant metal oxide, the conductivity of the conductive inorganic oxide powder may not further improved after doping of the dopant metal component and may result just waste of resources. So, it is not preferable.

In the conductive inorganic oxide powder of the present invention, any of zinc oxide particles, titanium oxide particles, silica particles, alumina particles, zirconia particles, magnesia particles, cerium oxide particles, nickel oxide particles, tin oxide particles, tellurium oxide particles and vanadium oxide particles are preferable to be used for the conductive inorganic oxide particles used as a core material. Inorganic oxide particles described above are suitable for carrying out the above-described manufacturing method because they enable efficient doping of the dopant metal component when a dopant metal component is doped.

Furthermore, the conductive inorganic oxide powder of the present invention, a sum component amount of the respective components, an amount of a constituent metal component (zinc) of inorganic oxide particles, an amount of a dopant metal component and an amount of an oxygen component can be made to be 99.9% by weight or more against to 100% by weight of an amount of the conductive inorganic oxide powder. The sum component amount of the respective components can be estimated to be so-called purity and hereinafter referred to as "purity". In a conventional wet synthesis method using a chemical reaction, aluminum sulfate is used to manufacture conductive inorganic oxide particles. So, too much residual amount of sulfate anions derived is made to be contained in the obtained conductive inorganic oxide particles and it makes the powder resistivity or resistance of a formed conductor higher. The lower limit of purity from such view point is 99.8% by weight. However, when the method of the present invention for manufacturing conductive inorganic oxide powder is applied, contamination of sulfate anions in the conductive inorganic oxide particles can be made small. As a result, the powder resistivity of the conductive inorganic oxide powder of the present invention or the resistance of a conductor formed can be made low.

Even though the conductive inorganic oxide powder of the present invention which has been described above is composed of very fine particles, it is excellent in powder resistivity. The reason why might be that a dopant metal component that is a dopant is homogeneously dispersed in inorganic oxide particles and a level contained of an impurity that disturbs the conductivity is low. The powder resistivity at this time is measured in the state that 1.0 g of the conductive inorganic oxide powder in a cylindrical vessel (inner diameter: 18 mm) is pressed with a pressure of 100 kg/cm$^2$ and resistance is measured between both pressed edges of a specimen. The powder shows low powder resistivity of 500 Ω·cm or less. Next, to make understanding of a content of technical concept of the present invention easy, the invention will be described with reference to examples.

[Example 1]

In the example 1, zinc oxide (ZnO) particles (trade name: CP-1, manufactured by Ishihara Sangyo Kaisha, Ltd.) were doped with an aluminum component ($Al^{3+}$). In the example 1, an electrolytic doping unit 1 shown in Figure 1 was used. The electrolytic doping unit 1 is composed of an electrolysis cell 2, an anode electrode 3 (aluminum electrode), a cathode electrode 4 (aluminum electrode), a stirring device 5 and an external power supply 6. An aluminum plate of 6.0 cm $\times$ 6.0 cm was used for each of the anode electrode 3 and the cathode electrode 4 and an inter-electrode distance between the anode electrode 3 and the cathode electrode 4 was set at 3.0 cm. Next, individual steps will be described one by one.

Step A: In the step A, a zinc oxide particles-containing slurry 7 was prepared in such a manner that 400 ml of deionized water was put into the electrolysis cell 2 of the electrolytic doping unit 1 and to which 10 g of zinc oxide powder as inorganic oxide particles and 0.05 g of zinc chloride ($ZnCl_2$) as an electrolyte were added while stirring with the stirring device 5. The zinc oxide powder used here was composed of zinc oxide particles having an average primary particle diameter of 20 nm. As the stirring device, a magnetic stirrer was used.

Step B: In the step B, electrolysis was started in the zinc oxide particles-containing slurry to make aluminum ions dissolve from an aluminum electrode that is the anode electrode 3 and then aluminum ions are made to be aluminum hydroxide to make the zinc oxide particles-containing slurry co-exist with aluminum hydroxide. As for the electrolysis conditions here, a synthesis current (200 mA), a synthesis time (1 hr) and a synthesis temperature (40°C) were adopted.

Furthermore, simultaneously at the beginning of the electrolysis, carbon dioxide gas bubbling (carbon dioxide gas flow amount: 100 ml/min) was carried out to partially dissolve zinc oxide particles in the zinc oxide particles-containing slurry to make original zinc oxide particles further fine and form basic zinc carbonate ($Zn(CO_3)$).

In the step B, it was intended to stick aluminum hydroxide obtained by converting $Al^{3+}$ ions made to dissolve from an anode on a surface of zinc oxide particles that were made fine and remained undissolved. Simultaneously, basic zinc carbonate generated by carbon dioxide gas bubbling was intended to co-precipitate to be composite of aluminum hydroxide and basic metal carbonate. That is, the first and second processes described above were simultaneously carried out.

After finishing the electrolysis, stirring of the slurry was continued for 24 hr as the additional stirring to improve particle dispersibility.

Step C: In the step C, the slurry after finishing both the electrolytic doping and additional stirring was filtrated with suction, dried under conditions of 105°C $\times$ 24 hr in a dryer, then the particles were collected by filter.

Then, since the carbon dioxide gas bubbling was carried out in the example 1, a pyrolysis treatment step for pyrolyzing the basic zinc carbonate generated by the carbon dioxide gas bubbling was carried out. As for the pyrolysis conditions, a pyrolysis temperature of 300°C, a heating time of 1 hr and a heating atmosphere of air atmosphere were adopted.

Step D: In the step D, particles after finishing the pyrolysis of basic zinc carbonate were fired to obtain conductive inorganic oxide particles. As for the firing condition at this time, a reducing atmosphere of 100% $H_2$, a firing temperature set at 400°C, and a firing time set for 3 hr was adopted.

[Example 2]

In the example 2, zinc oxide (ZnO) particles (trade name: CP-1, manufactured by Ishihara Sangyo Kaisha, Ltd.) were doped with a gallium component ($Ga^{3+}$). In the example 2, an electrolytic doping unit 1 shown in Figure 1 was used. The electrolytic doping unit 1 is composed of an electrolysis cell 2, an anode electrode 3 (gallium electrode), a cathode electrode 4 (copper electrode), a stirring device 5 and an external power supply 6. A copper (gallium?) plate of 6.0 cm $\times$ 6.0 cm was used for each of the anode electrode 3 and (a copper plate of 6.0 cm $\times$ 6.0 cm was used for) the cathode electrode 4 and an inter-electrode distance between the anode electrode 3 and the cathode electrode 4 was set at 3.0 cm. Next, individual steps will be described one by one.

Step A: In the step A, a zinc oxide particles-containing slurry 7 was prepared in such a manner that 400 ml of deionized water was put into the electrolysis cell 2 of the electrolytic doping unit 1 and to which 10 g of zinc oxide powder as inorganic oxide particles and 0.05 g of zinc chloride ($ZnCl_2$) as an electrolyte were added while stirring with the stirring device 5. The zinc oxide powder used here was composed of zinc oxide particles having an average primary particle diameter of 20 nm. As the stirring device, a magnetic stirrer was used.

Step B: In the step B, electrolysis in the zinc oxide particles-containing slurry was started to make gallium ions from a copper (gallium?) electrode that is the anode electrode 3 to make gallium ions be gallium hydroxide to make the zinc oxide particles-containing slurry co-exist with gallium hydroxide. As for the electrolysis conditions here, a synthesis current (100 mA), a synthesis time (1 hr) and a synthesis temperature (40°C) were adopted.

Furthermore, simultaneously at the beginning of the electrolysis, carbon dioxide gas bubbling (carbon dioxide gas flow amount: 100 ml/min) was carried out to partially dissolve zinc oxide particles in the zinc oxide particles-containing slurry to make original zinc oxide particles further fine and form basic zinc carbonate ($Zn(CO_3)$).

In the step B, it was intended to stick gallium hydroxide obtained by converting Ga3+ ions made to dissolve from an anode on a surface of zinc oxide particles that were made fine and remained undissolved. Simultaneously, basic zinc carbonate generated by carbon dioxide gas bubbling was intended to co-precipitate to be composite of gallium hydroxide and basic metal (zinc) carbonate. That is, the first and second processes described above were simultaneously carried out.

After finishing the electrolysis, stirring of the slurry was continued for 24 hr as the additional stirring to improve particle dispersibility.

Step C: In the step C, the slurry after finishing both the electrolytic doping and additional stirring was filtrated with suction, dried under conditions of 105°C × 24 hr in a dryer, then the particles were collected by filter.

Then, since the carbon dioxide gas bubbling was carried out in the example, a pyrolysis treatment step for pyrolyzing the basic zinc carbonate generated by the carbon dioxide gas bubbling was carried out. As for the pyrolysis conditions, a pyrolysis temperature of 300°C, a heating time of 1 hr and a heating atmosphere of air atmosphere were adopted.

Step D: In the step D, particles after finishing the pyrolysis of basic zinc carbonate were fired to obtain conductive inorganic oxide particles. As for the firing condition at this time, a reducing atmosphere of 100% H2, a firing temperature set at 400°C, and a firing time set for 3 hr was adopted.

[Example 3]

In the example 2, zinc oxide (ZnO) particles (trade name: CP-1, manufactured by Ishihara Sangyo Kaisha, Ltd.) were doped with an indium component ($Ir^{3+}$). In the example 2, an electrolytic doping unit 1 shown in Figure 1 was used. The electrolytic doping unit 1 is composed of an electrolysis cell 2, an anode electrode 3, a cathode electrode 4, a stirring device 5 and an external power supply 6. A copper plate of 6.0 cm × 6.0 cm was used for each of the anode electrode 3 and the cathode electrode 4 and an inter-electrode distance between the anode electrode 3 and the cathode electrode 4 was set at 3.0 cm. Next, individual steps will be described one by one.

Step A: In the step A, a zinc oxide particles-containing slurry 7 was prepared in such a manner that 400 ml of deionized water was put into the electrolysis cell 2 of the electrolytic doping unit 1 and to which 10 g of zinc oxide powder as inorganic oxide particles and 0.05 g of zinc chloride ($ZnCl_2$) as an electrolyte were added while stirring with the stirring device 5. The zinc oxide powder used here was composed of zinc oxide particles having an average primary particle diameter of 20 nm. As the stirring device, a magnetic stirrer was used.

Step B: In the step B, electrolysis in the zinc oxide particles-containing slurry was started to make iridium ions from a copper electrode that is the anode electrode 3 to make iridium ions be iridium hydroxide in the zinc oxide particles-containing slurry co-exist with iridium hydroxide. As for the electrolysis conditions here, a synthesis current (100 mA), a synthesis time (1 hr) and a synthesis temperature (40°C) were adopted.

Furthermore, simultaneously at the beginning of the electrolysis, carbon dioxide gas bubbling (carbon dioxide gas flow amount: 100 ml/min) was carried out to partially dissolve zinc oxide particles in the zinc oxide particles-containing slurry to make original zinc oxide particles further fine and form basic zinc carbonate ($Zn(CO_3)$).

In the step B, it was intended to stick indium hydroxide obtained by converting ($Ir^{3+}$) ions made to dissolve from an anode on a surface of zinc oxide particles that were made fine and remained undissolved. Simultaneously, basic zinc carbonate generated by carbon dioxide gas bubbling was intended to co-precipitate to be composite of indium hydroxide and basic metal carbonate. That is, the first and second processes described above were simultaneously carried out.

After finishing the electrolysis, stirring of the slurry was continued for 24 hr as the additional stirring to improve particle dispersibility.

Step C: In the step C, the slurry after finishing both the electrolytic doping and additional stirring was filtrated with suction, dried under conditions of 105°C × 24 hr in a dryer, then the particles were collected by filter.

Then, since the carbon dioxide gas bubbling was carried out in the example, a pyrolysis treatment step for pyrolyzing the basic zinc carbonate generated by the carbon dioxide gas bubbling was carried out. As for the pyrolysis conditions, a pyrolysis temperature of 300°C, a heating time of 1 hr and a heating atmosphere of air atmosphere were adopted.

Step D: In the step D, particles after finishing the pyrolysis of basic zinc carbonate were fired to obtain conductive inorganic oxide particles. As for the firing condition at this time, a reducing atmosphere of 100% $H_2$, a firing temperature set at 400°C, and a firing time set for 3 hr was adopted.

[Example 4]

In the example 4, zinc oxide (ZnO) particles (trade name: CP-1, manufactured by Ishihara Sangyo Kaisha, Ltd.) were doped with a copper component ($Cu^{1+}$). In the example 4, an electrolytic doping unit 1 shown in Figure 1 was used. The electrolytic doping unit 1 is composed of an electrolysis cell 2, an anode electrode 3 (copper electrode), a cathode electrode 4 (copper electrode), a stirring device 5 and an external power supply 6. A copper plate of 6.0 cm × 6.0 cm was used for each of the anode electrode 3 and the cathode electrode 4 and an inter-electrode distance between the anode electrode 3 and the cathode electrode 4 was set at 3.0 cm. Next, individual steps will be described one by one.

Step A: In the step A, a zinc oxide particles-containing slurry 7 was prepared in such a manner that 400 ml of deionized water was put into the electrolysis cell 2 of the electrolytic doping unit 1 and to which 10 g of zinc oxide powder as inorganic oxide particles and 0.05 g of zinc chloride ($ZnCl_2$) as an electrolyte were added while stirring with the stirring device 5. The zinc oxide powder used here was constituted from zinc oxide particles having an average primary particle diameter of 20 nm. As the stirring device, a magnetic stirrer was used.

Step B: In the step B, electrolysis in the zinc oxide particles-containing slurry was started to make cuprous ions from a copper electrode that is the anode electrode 3 to make cuprous ions be cuprous hydroxide in the zinc oxide particles-containing slurry to co-exist with cuprous hydroxide. As for the electrolysis conditions here, a synthesis current (100 mA), a synthesis time (1 hr) and a synthesis temperature (40°C) were adopted.

Furthermore, simultaneously at the beginning of the electrolysis, carbon dioxide gas bubbling (carbon dioxide gas flow amount: 100 ml/min) was carried out to partially dissolve zinc oxide particles in the zinc oxide particles-containing slurry to make original zinc oxide particles further fine and form basic zinc carbonate ($Zn(CO_3)$).

In the step B, it was intended to stick cuprous hydroxide obtained by converting $Cu^{1+}$ ions made to dissolve from an anode on a surface of zinc oxide particles that were made fine and remained undissolved. Simultaneously, basic zinc carbonate generated by carbon dioxide gas bubbling was intended to co-precipitate to be composite of cuprous hydroxide and basic metal carbonate. That is, the first and second processes described above were simultaneously carried out.

After finishing the electrolysis, stirring of the slurry was continued for 24 hr as the additional stirring to improve particle dispersibility.

Step C: In the step C, the slurry after finishing both the electrolytic doping and additional stirring was filtrated with suction, dried under conditions of 105°C × 24 hr in a dryer, then the particles were collected by filter.

Then, since the carbon dioxide gas bubbling was carried out in the example, a pyrolysis treatment step for pyrolyzing the basic zinc carbonate generated by the carbon dioxide gas bubbling was carried out. As for the pyrolysis conditions, a pyrolysis temperature of 300°C, a heating time of 1 hr and a heating atmosphere of air atmosphere were adopted.

Step D: In the step D, particles after finishing the pyrolysis of basic zinc carbonate were fired to obtain conductive inorganic oxide particles. As for the firing condition at this time, a reducing atmosphere of 100% $H_2$, a firing temperature set at 400°C, and a firing time set for 3 hr was adopted.

<Evaluation results of conductive inorganic oxide>

Measurement of resistivity: The powder resistivity was measured in the state that 1.0 g of the conductive inorganic oxide powder in a cylindrical vessel (inner diameter: 18 mm) is pressed with a pressure of 100 kg/cm$^2$ and resistance is measured between both pressed edges of a specimen, and the powder resistivity was calculated from the measured resistance value by using the following Expression 1.

[Expression 1]

$$[\text{Powder resistivity (}\Omega\cdot\text{cm)}] = \frac{[\text{Measurement value (}\Omega\text{)} \times \text{Sectional area of sample (cm}^2\text{)}]}{[\text{Sample thickness (cm)}]}$$

According to the results, the powder resistivity of conductive zinc oxide particles of a commercially available product (trade name: 23-K, manufactured by Hakusui Tech Co., Ltd.) obtained by a salt doping method according to a conventional wet reaction method was 500 Ω·cm. In contrast, the powder resistivity of conductive zinc oxide particles obtained by an electrolytic doping method of the present invention was 100 Ω·cm. That is, it can be understood that the conductive zinc oxide particles obtained by the electrolytic doping method of the present invention have very low powder resistivity when compared with conductive zinc oxide particles of a conventional commercially available product.

Measurement of component content: A doped ratio of a dopant metal component contained in the conductive zinc oxide particles was measured by an atomic absorption method. As for preparation of samples for atomic absorption measurement, 0.2 g of the obtained conductive zinc oxide particles were put into a 100 ml beaker and to which 50 ml of acid solution (hydrochloric acid : water = 1:1) was added followed by boiling, further followed by filtering and rinsing with water. A filtrate and rinsed solution were collected in a 100 ml measuring flask, diluted to a marked line with water to prepare a sample for atomic absorption analysis. In the measurement of absorbance by atomic absorption analysis, a calibration curve was prepared to obtain relationship between the dopant metal component and absorbance on reference samples having known dopant metal component concentrations. The absorbance obtained from prepared samples were compared with the calibration curve to estimate a dopant metal component concentration, and then a dopant metal component content in the conductive zinc oxide particles was calculated.

Furthermore, the other components were analyzed by using a wavelength-dispersion type X-ray fluorescence spectrometer RIX-3000 (tube voltage: 50 KV, tube current: 50 mA) manufactured by Rigaku Corporation.

According to the results, a doping amount of the dopant metal components in each of conductive zinc oxide particles obtained in the Examples 1 to 4 were about 1% by weight and a sum component amount of the respective components of zinc, the dopant metal component and oxygen was 99.9% by weight or more. In contrast, a doping amount of the dopant metal component was about 1% by weight, a sum component amount of the respective components of zinc, the dopant metal component and oxygen was 99.8% by weight in the commercially available product. That is, it was confirmed that the conductive zinc oxide particles obtained in the examples have higher purity than the commercially available product.

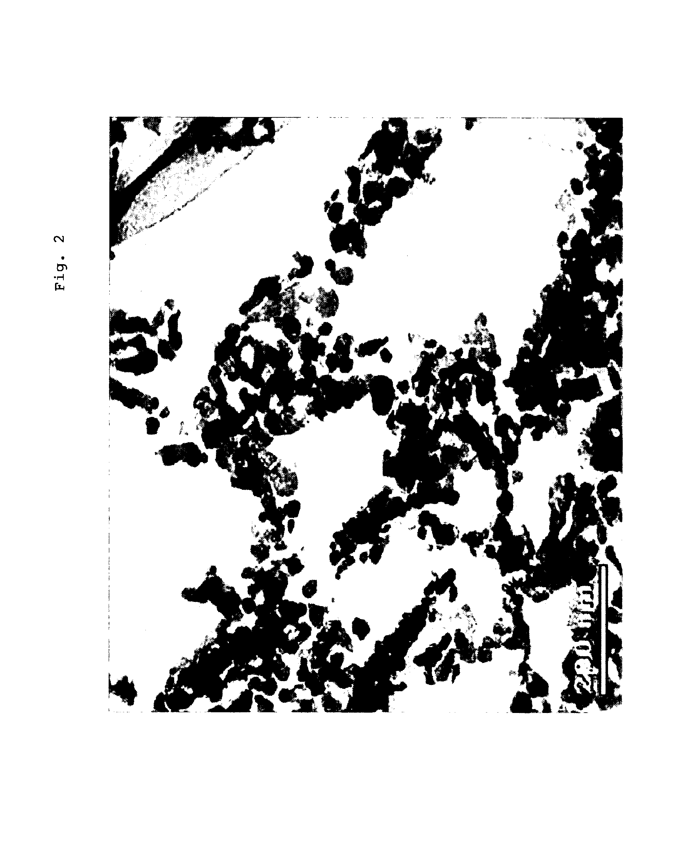

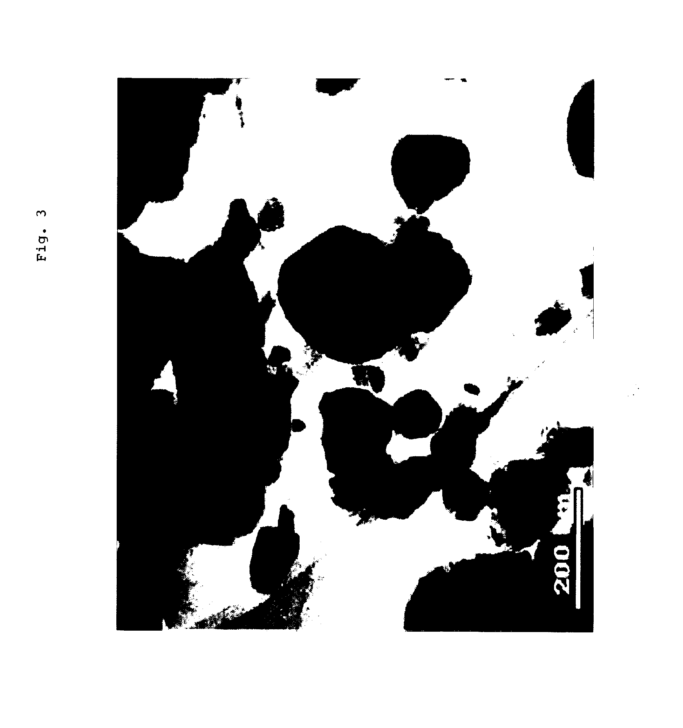

Measurement of average primary particle diameter: Particle diameters are measured in the bright-field image of a transmission electron microscope of the conductive zinc oxide particles. Particle diameters were measured on 30 or more particles and an average value was taken as an average primary particle diameter. According to the results, an average primary particle diameter of commercially available conductive zinc oxide particles obtained by a salt doping method that is a conventional wet reaction method was about 200 nm as can be seen in Figure 3. In contrast, an average primary particle diameter of the conductive zinc oxide particles obtained by an electrolytic doping method of the present invention was about 20 nm as can be seen in Figure 2. That is, it was confirmed that the conductive zinc oxide particles obtained according to an electrolytic doping method of the present invention have very fine particle diameters when compared with the conventional commercially available conductive zinc oxide particles.

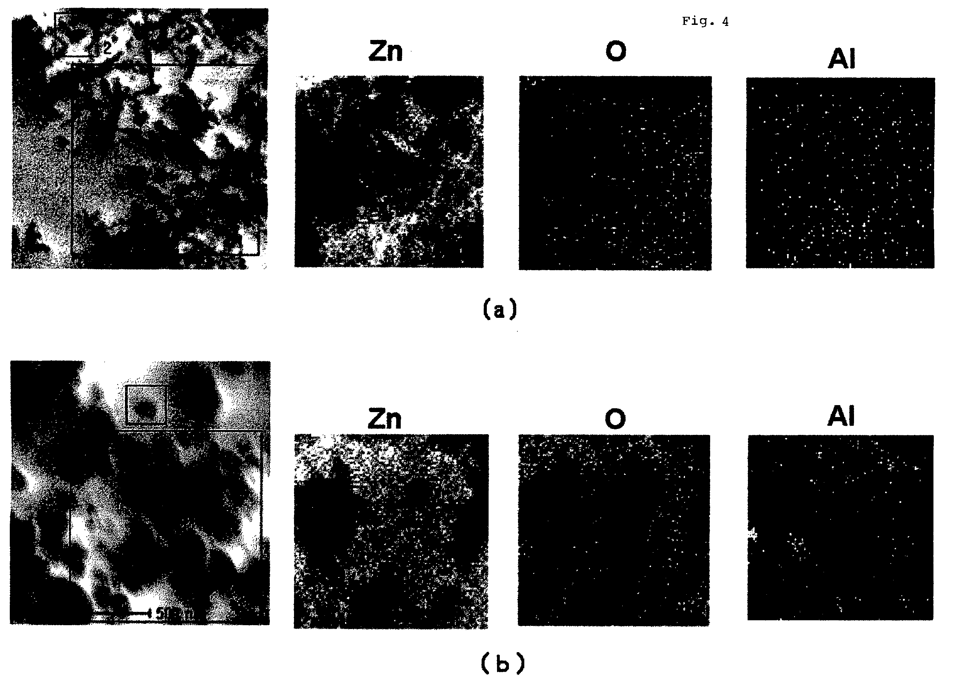

Furthermore, in order to investigate distribution states of zinc, oxygen and aluminum in both zinc oxide particles obtained according to the electrolytic doping method and zinc oxide particles commercially available, element mapping was investigated with a transmission electron microscope. The results are shown in Figure 4. Figure 4(a) is for conductive zinc oxide particles obtained according to the electrolytic doping method of the present invention, and Figure 4(b) is for commercially available conductive zinc oxide particles obtained through a wet reaction method. In each of the Figure 4 (a) and Figure 4(b), mapping of the respective elements was carried out in a region surrounded by a large square in a observation image at left end and mapping images on each elements lines on a right side. As is obviously understood from the comparison between the Figure 4(a) and Figure 4(b), when the electrolytic doping method is used, uneven distribution of element is less than that of the commercially available conductive zinc oxide particles in all elements, i.e. a homogeneous distribution state is achieved.

A specimen for investigation with transmission electron microscope above was a thin film specimen prepared by the procedure, mixing and dispersing conductive inorganic zinc oxide particles with an epoxy resin, curing of the epoxy resin, slicing of the cured epoxy resin containing the conductive inorganic zinc oxide particles into a 70 nm thickness by a microtome. Then, the thin film specimen was prepared to be a specimen for transmission electron microscope observation by sticking to a collodion film.

Industrial Applicability

A method of the present invention for manufacturing conductive inorganic oxide particles enables to obtain conductive inorganic oxide particles fine and low in the powder resistivity that have been never manufactured through a conventional manufacturing method. That is, when the fine conductive inorganic oxide particles obtained according to the manufacturing method of the present invention is used as a raw material for pastes or inks for forming transparent electrodes in a field of electronic materials, the powder can be homogeneously mixed into resins for constituting ink or paste. As a result, when coated layer and/or film formed is applied, electrode films, coated films and the like excellent in transparency can be obtained. Furthermore, conductive inorganic oxide particles can be used in a field of cosmetics because of fine particle diameters. For example, when the conductive inorganic oxide particles are blended in a foundation, even when coated thin foundation on a skin is transparent to show bare skin impression, a sufficient UV-ray shielding effect can be achieved. In addition, as zinc oxide powder is blended in cosmetics, not only UV-ray is absorbed but also IR-rays transmitting is prevented to make heat rays on a skin moderate. Furthermore, because the conductive inorganic oxide particles of the present invention is fine, it can be used in place of zinc oxide powder as an additive to rubber products, plastic products and paint products for preventing static charge and it enables to achieve high conductivity with smaller blending ratio, so, cost reduction and improvement in transparency of rubber products, plastic products and paint products can be achieved also.

Brief Description of the Drawings

Figure 1 is a schematic diagram showing a construction of an electrolytic doping unit;
Figure 2 is a transmission electron microscope observation image of conductive zinc oxide particles of the present invention;
Figure 3 is a transmission electron microscope observation image of commercially available conductive zinc oxide particles; and
Figure 4 is a mapping diagram obtained by investigation with the transmission electron microscope and showing distribution states of the respective elements in particles of the conductive inorganic oxide particles of the present invention and commercially available conductive inorganic oxide particles.

Description of Symbols

1      Electrolytic doping unit
2      Electrolysis cell
3      Anode electrode
4      Cathode electrode
5      Stirring device
6      External power supply
7      Inorganic oxide particles-containing slurry (zinc oxide particles-containing slurry)
10     Inorganic oxide particles

Claims

1. A method for manufacturing conductive inorganic oxide particles in which conductivity is furnished by doping a dopant metal component into the inorganic oxide particle;
wherein electrolytic doping where the dopant metal component and a constituent component of the inorganic oxide particles are made to be a composite by carrying out electrolysis of the inorganic oxide particles-containing slurry which is made to be contained a dopant metal component, followed by filtering, drying and collection by filter.

2. The method for manufacturing conductive inorganic oxide particles according to claim 1 in which conductivity is furnished by doping a dopant metal component into the inorganic oxide particle **characterized in** manufactured by carrying out steps A to D described below:

Step A: A step for preparing the inorganic oxide particles-containing slurry which is made to contain the inorganic oxide particles;
Step B: A step for doping a dopant metal component into the inorganic oxide particles in which the inorganic oxide particles-containing slurry which is made to contain a dopant metal component is carried out an electrolysis method for electrolytic doping;
Step C: A step for filtrating and drying the slurry after finishing the electrolytic doping and collect particles by filter; and
Step D: A step for firing the particles collected by filter to obtain conductive inorganic oxide particles.

3. The method for manufacturing conductive inorganic oxide particles according to claim 2, wherein the inorganic oxide particles used in the step A are particles made of any of zinc oxide, titanium oxide, silica, alumina, zirconia, magnesia, cerium oxide, nickel oxide, tin oxide, tellurium oxide and vanadium oxide.

4. The method for manufacturing conductive inorganic oxide particles according to claim 2 or 3, wherein the inorganic oxide particles used in the step A have an average primary particle diameter of 1 nm to 30 nm.

5. The method for manufacturing conductive inorganic oxide particles according to any of claims 2 to 4, wherein the inorganic oxide particles-containing slurry prepared in the step A contains 5% by weight to 30% by weight of the inorganic oxide particles.

6. The method for manufacturing conductive inorganic oxide particles according to any of claims 2 to 5, wherein the inorganic oxide particles-containing slurry prepared in the step A contains an electrolyte at a concentration of 0.001 mol/l to 0.05 mol/l.

7. The method for manufacturing conductive inorganic oxide particles according to any of claims 2 to 6, wherein a dopant metal component made to be contained in the inorganic oxide particles-containing slurry in the step B is contained at a concentration of 0.1% by weight to 20.0% by weight in terms of an oxide of the dopant metal component.

8. The method for manufacturing conductive inorganic oxide particles according to any of claims 2 to 7, wherein a dissolvable anode electrode made of a dopant metal is used in the electrolysis method in the step B to supply dopant metal ions to the inorganic oxide particles-containing slurry by electrolysis to maintain a concentration of the dopant metal ions at a constant level.

9. The method for manufacturing conductive inorganic oxide particles according to any of claims 2 to 8, wherein a cathode electrode made of the dopant metal is used in the electrolysis method in the step B.

10. The method for manufacturing conductive inorganic oxide particles according to any of claims 2 to 9, wherein electrolysis in the electrolysis method in the step B is carried out while stirring the slurry.

11. The method for manufacturing conductive inorganic oxide particles according to any of claims 2 to 10, wherein electrolysis in the electrolysis method in the step B is carried out at a current density of 0.3 mA/cm$^2$ to 100 mA/cm$^2$.

12. The method for manufacturing conductive inorganic oxide particles according to any of claims 2 to 11, wherein electrolysis in the electrolysis method in the step B is carried out by setting a slurry temperature in the range of 30°C to 85°C.

13. The method for manufacturing conductive inorganic oxide particles according to any of claims 2 to 12, wherein, stirring of the slurry after finishing the electrolysis as an additional stirring to improve particle dispersion is carried out for 1 hr or more in the step B.

14. The method for manufacturing conductive inorganic oxide particles according to any of claims 1 to 13, wherein an atmosphere of the firing in the step D is any of a hydrogen-containing atmosphere, an inert gas atmosphere, an ammonia gas atmosphere and a vacuum atmosphere.

15. The method for manufacturing conductive inorganic oxide particles according to any of claims 1 to 14, wherein a firing temperature of the firing in the step D is from 250°C to 800°C.

16. The method for manufacturing conductive inorganic oxide particles according to any of claims 1 to 15, wherein a carbon dioxide gas is bubbled during the electrolysis in the electrolysis method in the step B.

17. The method for manufacturing conductive inorganic oxide particles according to any of claims 2 to 16, wherein, a pyrolysis treatment step for pyrolyzing basic metal carbonate generated by the carbon dioxide gas bubbling is disposed between the steps C and D.

18. The method for manufacturing conductive inorganic oxide particles according to any of claims 1 to 16, wherein the dopant metal component is one kind or two or more kinds of components selected from gallium, iridium, copper, antimony, arsenic, boron, thallium, bismuth, vanadium, niobium, tantalum and iron.

19. A conductive inorganic oxide powder composed of the conductive inorganic oxide particles obtained by doping a dopant metal component into the inorganic oxide particle according to the method for manufacturing conductive inorganic oxide particles according to any of claims 1 to 18, wherein the conductive inorganic oxide powder is composed of conductive inorganic oxide particles having an average primary particle diameter of 3 nm to 40 nm.

20. The conductive inorganic oxide powder according to claim 19, wherein 0.1% by weight to 20.0% by weight of the dopant metal component is contained in terms of the oxide of the dopant metal component.

21. The conductive inorganic oxide powder according to claim 19 or 20, wherein any of zinc oxide particles, titanium oxide particles, silica particles, alumina particles, zirconia particles, magnesia particles, cerium oxide particles, nickel oxide particles, tin oxide particles, tellurium oxide particles and vanadium oxide particles are used as the inorganic oxide particles.

22. The conductive inorganic oxide powder according to any of claims 19 to 21, wherein the dopant metal component is one kind or two or more kinds of components selected from gallium, iridium, copper, antimony, arsenic, boron, thallium, bismuth, vanadium, niobium, tantalum and iron.

23. The conductive inorganic oxide powder according to any of claims 19 to 22, wherein a sum component amount of the respective components, an amount of metal components constituting the inorganic oxide particles, an amount of a dopant metal component and an amount of an oxygen component is preferable to be 99.9% by weight or more against to 100% by weight of an amount of the conductive inorganic oxide powder.

24. The conductive inorganic oxide powder according to any of claims 19 to 23, wherein powder resistivity measured in the state that 1.0 g of the conductive inorganic oxide powder in a cylindrical vessel (inner diameter: 18 mm) is pressed with a pressure of 100 kg/cm$^2$ and resistance is measured between both pressed edges of a specimen is 500 $\Omega$·cm or less.

Fig. 1

Fig. 2

Fig. 3

Fig. 4

| **INTERNATIONAL SEARCH REPORT** | International application No. |
| --- | --- |
| | PCT/JP2008/072757 |

A. CLASSIFICATION OF SUBJECT MATTER
*C01B13/14*(2006.01)i, *C01B19/00*(2006.01)i, *C01B33/18*(2006.01)i, *C01F7/02*
(2006.01)i, *C01F17/00*(2006.01)i, *C01G9/02*(2006.01)i, *C01G19/02*(2006.01)i,
*C01G23/047*(2006.01)i, *C01G25/02*(2006.01)i, *C01G31/02*(2006.01)i,
According to International Patent Classification (IPC) or to both national classification and IPC

B. FIELDS SEARCHED

Minimum documentation searched (classification system followed by classification symbols)
C01B13/14, C01B19/00, C01B33/18, C01F7/02, C01F17/00, C01G9/02, C01G19/02,
C01G23/047, C01G25/02, C01G31/02, C01G53/04, C25B1/00, H01B1/08,
H01B13/00

Documentation searched other than minimum documentation to the extent that such documents are included in the fields searched
Jitsuyo Shinan Koho          1922-1996     Jitsuyo Shinan Toroku Koho     1996-2009
Kokai Jitsuyo Shinan Koho     1971-2009     Toroku Jitsuyo Shinan Koho     1994-2009

Electronic data base consulted during the international search (name of data base and, where practicable, search terms used)
JSTPlus(JDreamII), JST7580(JDreamII)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-053420 A  (CF High Tech Co., Ltd.), 22 February, 2000 (22.02.00), Claim 1; Par. Nos. [0001], [0011]; example 1 (Family: none) | 1-24 |
| A | JP 10-218689 A  (Yasumichi MATSUMOTO), 18 August, 1998 (18.08.98), Claims 1, 5, 8 (Family: none) | 1-24 |
| A | JP 2003-535013 A  (Eveready Battery Co., Inc.), 25 November, 2003 (25.11.03), Claims 1, 7 & JP 2003-535448 A     & US 2003/0215712 A1 & US 2003/0215385 A1    & EP 1290740 A & EP 1297581 A | 1-24 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 21 January, 2009 (21.01.09) | Date of mailing of the international search report 03 February, 2009 (03.02.09) |
| --- | --- |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/072757

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-524661 A (Henkel KGaA), 06 August, 2002 (06.08.02), Claims 1, 13 to 14 & US 6676821 B1 & EP 1121477 A1 | 1-24 |
| A | JP 48-051222 A (Hitachi Maxell, Ltd.), 18 July, 1973 (18.07.73), Example 3 (Family: none) | 1-24 |

Form PCT/ISA/210 (continuation of second sheet) (April 2007)

<table>
<tr><td><strong>INTERNATIONAL SEARCH REPORT</strong></td><td>International application No.<br>PCT/JP2008/072757</td></tr>
</table>

Continuation of A. CLASSIFICATION OF SUBJECT MATTER
(International Patent Classification (IPC))

*C01G53/04*(2006.01)i, *C25B1/00*(2006.01)i, *H01B1/08*(2006.01)i,
*H01B13/00*(2006.01)i

(According to International Patent Classification (IPC) or to both national classification and IPC)

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002116455 A
- JP 8012332 A
- JP 5294631 A
- JP 2000053420 A